# EUROPÄISCHE PATENTANMELDUNG

(11) **EP 0 919 318 A1**
(43) Veröffentlichungstag der Anmeldung: **02.06.1999**
(21) Anmeldenummer: 98121344.0
(22) Anmeldetag: 10.11.1998
(51) Int. Cl.: B23K 26/08, B23K 37/047

(54) **Einrichtung zum Positionieren, Spannen und Laserstrahlschweissen von mindestens zwei Blechplatinen**

(30) Priorität: 25.11.1997 DE 19752096
(71) Anmelder: Krupp Drauz Ingenieurbetrieb GmbH, 09337 Hohenstein-Ernstthal (DE)
(72) Erfinder: Rohland, Jörg, 09119 Chemnitz (DE); Stein, Hans, 09358 Wüstenbrand (DE); Bünning, Klaus, 09113 Chemnitz (DE)
(74) Vertreter: Illing, Ralf, Dipl.-Jur. Ing.

(57) **Zusammenfassung**

Mit der Einrichtung werden mindestens zwei Blechplatinen gleicher oder unterschiedlicher Stärken, Formen, Größen und Werkstoffen positioniert, gespannt und zu einer Blechplatine mit Laserstrahl verschweißt. Die Einrichtung besteht aus beidseitig des Schweißspaltes angeordneten Spanneinrichtungen, einem Schweißtisch, gegen dessen Tischfläche die Blechplatinen gespannt werden, Mittenanschlägen, sowie einer Laserstrahlschweißanlage, deren Schweißoptik parallel zum Schweißspalt verfahrbar ist.

Durch um eine waagerechte Achse schwenkbare Spannbalken wird die Zugängigkeit der Spannmittel und des Schweißtisches verbessert. Durch die Verstellbarkeit einer Hälfte des Schweißtisches in senkrechter Ebene und eine angepaßte Spannbewegung können gewölbte Blechplatinen verschweißt werden. Durch kurvenförmigen Verlauf des Schweißspaltes und angepaßte Spannhebellängen werden in waagerechter Ebene kurvenförmig verlaufende Schweißnähte hergestellt.

## Beschreibung

Die Erfindung betrifft eine Einrichtung zum Positionieren, Spannen und Laserstrahlschweißen von mindestens zwei Blechplatinen gleicher oder unterschiedlicher Stärken, Formen, Großen und Werkstoffen zu einer Blechplatine, mit beidseitig des Schweißspaltes angeordneten Spanneinrichtungen, einem Schweißtisch, gegen dessen Tischfläche die Blechplatinen gespannt werden, sowie einer Laserstrahlschweißanlage, deren Schweißoptik parallel zum schweißspalt verfahrbar ist.

Aus dem US-Patent 5,266,770 ist eine Laserstrahlschweißmaschine bekannt, deren Schweißtisch ein fester Bestandteil des Maschinengestellers ist. Seins Tischfläche ist im Bereich der Schweißnaht mitt einem Spalt versehen, durch welchen Mittenanschläge über die Tischfläche ragend ausgefahren werden können. Im Maschinengestell sind beidseitig des Schweißspaltes senkrecht verfahrbare Traversen gelagert, die zum einen dem Beschneiden der Blechkanten dienen. Zum anderen sind an deren senkrechten Flächen eine Anzahl Spannzylinder befestigt, deren Kolbenstangen am freien Ende Druckstücke tragen, mit denen die zu verschweißenden Bleche auf den Schweißtisch gedrückt werden. Die Schweißoptik der Laserstrahlschweißmaschine ist an einer Traverse längs des Schweißspaltes verfahrbar gelagert. Diese Lösung ist nicht zur Herstellung von Schweißnähten geeignet, die alternativ kurvenförmig oder gerade verlaufen. Weiterhin sind die Spannzylinder, die Druckstücke und der Schweißtisch schwer zugängig. Dadurch sind Einstell- und Wartungsarbeiten nur mit großem Zeitaufwand möglich.

Die EP 0 622 152 A1 beschreibt eine Laserstrahlschweißanlage, deren Schweißtisch fest mit dem Maschinengestell verbunden ist. Eine Hälfte der Tischfläche ist rechtwinklig zum Schweißspalt auf dem Maschinengestell verschiebbar gelagert. Ein unterhalb dieser Tischfläche angebrachter Hydraulikzylinder dient als Antrieb für die Verschiebebewegung. Durch Ständer am Maschinengestell werden Traversen getragen, die beidseitig des Schweißspaltes angeordnet sind. An diesen Traversen sind zum Schweißtisch zeigend mehrere Spannzylinder befestigt, deren Druckschuhe die zu verschweißenden Bleche auf den Schweißtisch drücken. Über der verschiebbaren Tischfläche ist zwischen Spannzylinder und Druckschuh ein schwenkbarer zweiarmiger Hebel angeordnet, dessen Aufgabe es ist, beim Spannen des Bleches eine Bewegungskomponente der Druckschuhe in Richtung auf den Schweißspalt zu erzeugen, um dadurch die Bleche stirnseitig aneinander zu drücken. Diese Spanneinrichtungen sind in einer größeren Anzahl angeordnet, um auch schmalere Bleche mit zwei Spannschuhen zu überdecken. Alle an der Spannung beteiligten Teile bedürfen der regelmäßigen Einstellung, Wartung und Reinigung. Diese ist aber bei der Lösung sehr zeitaufwendig und schwierig, weil nur schlechte Zugängigkeit gegeben ist. Weiterhin läßt diese Lösung nur die Herstellung gerader Schweißnähte zu. Kurvenförmige Schweißnähte sind auf dieser Anlage nicht herstellbar.

Es ist Aufgabe der Erfindung, eine Einrichtung der oben genannten Gattung dahingehend zu verbessern, daß die Zugängigkeit der Spannmittel und des Schweißtisches erheblich erleichtert und der dafür erforderliche Zeitaufwand reduziert wird. Die verbesserte Zugängigkeit soll außerdem dazu dienen, die neu zu schaffende Verstellbarkeit der Spannmittel sowie der Tischfläche des Schweißtisches genau und mit geringem Zeitaufwand an den geraden oder kurvenförmigen Verlauf der Schweißnaht anpassen zu können.

Die Aufgabe wird erfindungsgemäß durch die Merkmale der Kennzeichen des Patentanspruches 1 gelöst. Die Patentansprüche 2 bis 8 beinhalten vorteilhafte Ausgestaltungen der Merkmale des Patentanspruches 1.

Die schwenkbare Lagerung der Spannbalken ist die Voraussetzung für eine einfache und schnelle Einstellung, Austausch und Wartung der Spannmittel und des Schweißtisches. Durch die Schwenkung der Spannbalken um ca. 100 Grad aus der Arbeitsstellung in eine Wartungsstellung wird neben der guten Zugängigkeit der Spannmittel auch eine gute Zugängigkeit des Schweißtisches erzielt. Dadurch kann dieser auf einfache Weise und schnell gereinigt werden. Die Mittenanschläge sind der Wartung und Einstellung ebenfalls gut zugängig. Die Herstellung gewölbter Platinenformen und/oder kurvenförmiger Schweißnähte wird durch die leichte Wechselbarkeit des Schweißtisches bzw. der Höheneinstellung eines Teiles der Tischfläche des Schweißtisches ermöglicht. Die Anpassung der Spannmittel an eine gewölbte Platinenform und /oder kurvenförmige Schweißnaht ist durch die einfache Wechselbarkeit der vollständigen Lagerböcke oder nur der doppelarmigen Winkelhebel und deren baukastenartiger Ausbildung mit unterschiedlichen Armlängen der Spannhebel ermöglicht.

In den Zeichnungen ist die Erfindung an einem Ausführungsbeispiel erläutert. Es zeigen
- Fig. 1: die Vorderansicht der Platinen-Schweißmaschine mit abgenommener Stirnplatte des Schweißtisches und
- Fig. 2: eine perspektivische Ansicht eines Spannbalkens.

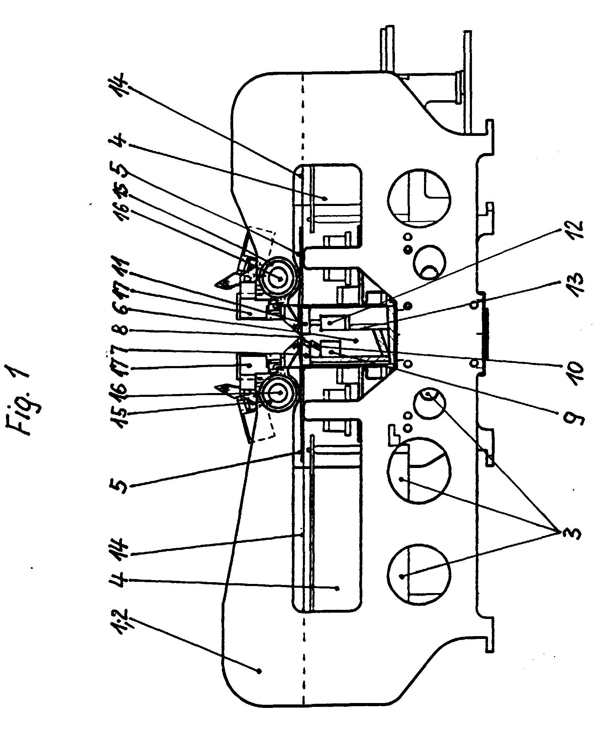

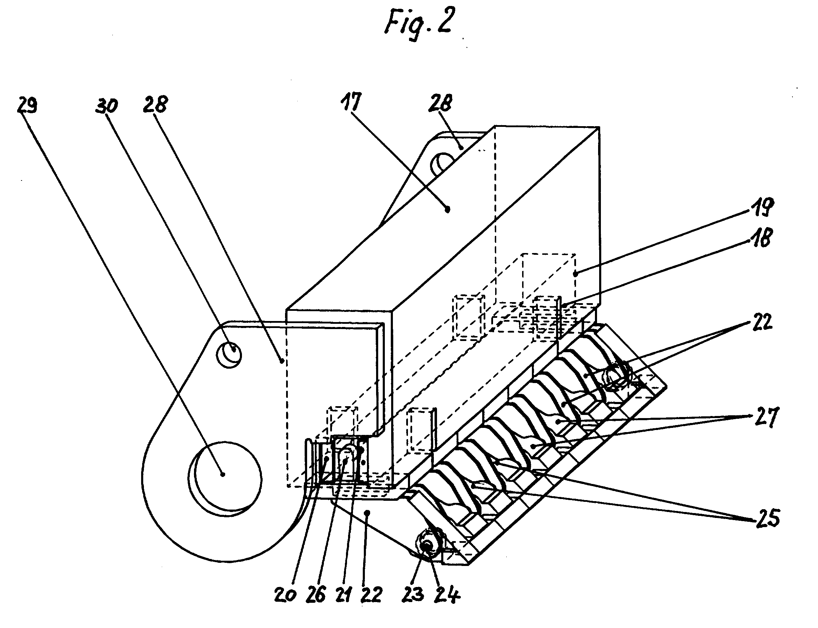

Die Schweißmaschine besteht aus zwei stirnseitig angeordneten C-Gestellen 1;2, die durch mehrere Traversen 3 im unteren Bereich miteinander verbunden sind (Fig. 1). Die Durchbrüche 4 in den C-Gestellen 1;2 sind in ihrer Ausdehnung so gewählt, daß die größten zusammengeschweißten Platinen 5 hindurchführbar sind. Auf den mittleren Traversen 3 ist leicht lösbar ein Schweißtisch 6 befestigt. Dieser besteht, im Querschnitt gesehen, aus einem kastenförmigen Gehäuse, dessen nach oben zeigende Fläche als Tischfläche 7 mit längsverlaufendem Schweißspalt 8 ausgebildet ist. An der Innenseite der linken Seitenwand sind, in Längsrichtung verteilt, mehrere Verschiebeantriebe 9 mit an sich bekannten Mittenanschlägen 10 befestigt. Der rechte Teil der Tischfläche 7 ist in schmale streifenförmige Segmente 11 zerlegt. Jedes Segment 11 ist auf der Kolbenstange eines Pneumatikzylinders 12 befestigt. Alle Pneumatikzylinder 12 sind auf einer zwischen den Stirnplatten des Schweißtisches 6 angeordneten Schiene 13 angebracht, die gegen den Boden des Schweißtisches 6 durchgängig abgestützt ist. Jeder Pneumatikzylinder 12 ist über ein einzeln ansteuerbares Ventil mit einem Druckerzeuger verbunden. Zwischen den C-Gestellen 1;2 sind auf den Traversen 3 abgestützt beidseitig des Schweißspaltes 8 in der Höhe der Tischplatte 7 des Schweißtisches 6 Auflagen 14 für die zu verschweißenden Blechplatinen 5 angebracht. Die beiden oberhalb des Schweißtisches 6 liegenden freien Enden jedes C-Gestelles 1;2 sind mit je einer Bohrung 15 versehen, in denen je ein über ein Schneckenradge triebe verdrehbarer Zapfen 16 gelagert ist. Auf den gleichachsig angeordneten, zueinander zeigenden Zapfen 16 ist ein Spannbalken 17 so gelagert, daß er parallel zum Schweißspalt 8 und parallel zum zweiten Spannbalken 17 verläuft. Jeder Spannbalken 17 besteht aus einem, im Querschnitt rechteckigen, rohrförmigen Träger, dessen beide Stirnseiten durch je eine Stirnplatte verschlossen sind (Fig. 2). In die nach unten zeigende Fläche des Trägers ist ein Durchbruch 18 gefräst. Parallel zu dessen beiden Längskanten im Innenraum des Trägers sind kastenförmige Aufnahmen 19 für je einen Druckschlauch 20;21 angeordnet. An die nach unten zeigende Fläche des Trägers sind paarweise mehrere Lagerböcke 22 angeschraubt. Diese sind keilförmig ausgebildet und zeigen mit ihrer Spitze zum Schweißspalt 8. Nahe der Spitze sind sie mit Lagerbohrungen 23 versehen, die einen Lagerbolzen 24 aufnehmen, auf dem nebeneinander mehrere doppelarmige Winkelhebel 25 gelagert sind. Die Winkelhebel 25 sind so ausgebildet, daß ein Arm 26 mit seinem freien Ende in den Durchbruch 18 des Trägers bis zwischen die beiden Spannschläuche 20;21 ragt. Der andere Arm ist als Spannhebel 27 ausgebildet und endet mit seinem freien Ende nahe dem Schweißspalt 8. Das freie Ende ist als wechselbarer Spannschuh gestaltet. Zur Anpassung an eine gekrümmte Schweißnaht sind Winkelhebel 25 mit unterschiedlich langen Spannhebeln 27 vorhanden, die entsprechend der Form der Schweißnaht zusammenstellbar sind. An den Stirnplatten jedes Trägers sind Laschen 28 angeschraubt, die über die hintere Seitenwand des Trägers hinausragen und dort senkrecht übereinander eine Lagerbohrung 29 und eine Indexbohrung 30 tragen. In der Lagerbohrung 29 ist der im C-Gestell 1;2 verdrehbare Zapfen 16 befestigt, wodurch der Spannbalken 17 im C-Gestell 1;2 schwenkbar gelagert ist. In die Indexbohrung 30 ragt in der Arbeitsstellung des Spannbalkens 17 ein am C-Gestell 1;2 gelagerter Indexbolzen (nicht gezeichnet).
Die Breite der Spannschuhe der Spannhebel 27 entspricht der Breite der Segmente 11 der Tischfläche 7. Spannschuhe und Segmente 11 sind deckungsgleich angeordnet.
Alternative Lösungen zur Anpassung der Tischfläche 7 an eine senkrechte Wölbung der Blechplatinen 5 bestehen darin , daß die segmentierte Tischplattenhälfte 11 als in der Stärke entsprechend dimensionierte Stahlplatte ausgebildet ist, die durch darunter angeordnete Druckzylinder verformt wird. Schließlich kann die Tischplattenhälfte 11 auch als ein oder mehrere Formstücke ausgebildet sein, die mit der gewünschten Wölbung hergestellt worden sind.
Für die Herstellung längs gekrümmter Schweißnähte sind wechselbar Schweißtische 6 vorgesehen, in die eine entsprechend geformte Schweißnaht eingearbeitet ist. Dem Verlauf der Schweißnaht sind die erforderlichen Mittenanschläge 10 zugeordnet.

Die Arbeitsweise der Einrichtung ist folgende:
Die zu verschweißenden Blechplatinen 5 werden durch Transportroboter auf die Auflagen 14 beidseitig des Schweißspaltes 8 abgelegt. Dann wird von einer Seite des Schweißspaltes 8 die dort liegende Blechplatine 5 an die Mittenanschläge 10 geschoben und geklemmt. Nach Absenkung der Mittenanschläge 10 werden die Blechplatinen 5 der anderen Seite des Schweißspaltes 8 gegen die geklemmte Blechplatine 5 geschoben und dort geklemmt. Nach der so erfolgten Fixierung aller Blechplatinen 5 wird die an einem Portal gelagerte Schweißoptik der Laserstrahlschweißanlage (nicht gezeichnet) mit an sich bekannten Mitteln entlang der Schweißfuge gesteuert und so die Schweißnaht hergestellt. Durch den Durchbruch 4 im C-Gestell 1;2 werden die miteinander verschweißten Blechplatinen 5 nach Lösung der Klemmung aus der Einrichtung entnommen.

Die Arbeitsweise der Spannbalken 17 ist folgende:
Nach Lösung der Indexbolzen werden die Spannbalken 17 gegenüber der Arbeitsstellung um 100 Grad mittels der Schneckengetriebe in die Wartungsstellung geschwenkt. Dort werden die erforderlichen Wartungsarbeiten, wie Reinigen, Einstellen und Auswechseln von Verschleißteilen durchgeführt. In dieser Wartungsstellung ist auch der Schweißtisch 6 gut von oben zugängig und kann schnell gewartet werden. Außerdem kann bei dieser Stellung der vollständige Schweißtisch 6 mit wenig Mühe gewechselt werden.
Nach Rückschwenken der Spannbalken 17 in die Arbeitsstellung und Indexierung sind diese einsatzbereit. Durch Druckbeaufschlagung des äußeren Spannschlauches 20 werden die Spannhebel 27 gegen die Tischfläche 7;11 gedrückt und spannen so die dort liegenden Blechplatinen 5. Die Druckverteilung im Druckschlauch 20 paßt die Schwenkbewegung der Spannhebel 27 an die unterschiedlichen Höhen der Wölbung des Schweißtisches 11 an. Durch die Druckbeaufschlagung des inneren Druckschlauches 21 werden die Spannhebel 27 von der Fläche des Schweißtisches 6 abgehoben.

### Aufstellung der Bezugszeichen

- 1: C-Gestell
- 2: C-Gestell
- 3: Traversen
- 4: Durchbrüche
- 5: Platinen
- 6: Schweißtisch
- 7: Tischfläche
- 8: Schweißspalt
- 9: Verschiebeantriebe
- 10: Mittenanschläge
- 11: Segmente
- 12: Pneumatikzylinder
- 13: Schiene
- 14: Auflagen
- 15: Bohrung
- 16: Zapfen
- 17: Spannbalken
- 18: Durchbruch
- 19: Aufnahmen
- 20: Druckschlauch
- 21: Druckschlauch
- 22: Lagerböcke
- 23: Lagerbohrungen
- 24: Lagerbolzen
- 25: Winkelhebel
- 26: Arm
- 27: Spannhebel
- 28: Laschen
- 29: Lagerbohrung
- 30: Indexbohrung

## Patentansprüche

1. Einrichtung zum Positionieren, Spannen und Laserstrahlschweißen von mindestens zwei Blechplatinen gleicher oder unterschiedlicher Stärken und Formen, gleicher oder unterschiedlicher Größen und gleicher oder unterschiedlicher, Werkstoffe zu einer Blechplatine, mit beidseitig des Schweißspaltes angeordneten Spanneinrichtungen und einem Schweißtisch, gegen dessen Tischfläche die Blechplatinen gespannt werden, Mittenanschlägen sowie einer Laserstrahlschweißanlage, deren Schweißoptik parallel zum Schweißspalt verfahrbar ist,
gekennzeichnet durch
um eine waagerechte Achse (16) schwenkbare Spannbalken (17), an deren zum Schweißtisch (6) zeigenden Flächen Lagerböcke (22) leicht lösbar befestigt sind, in denen doppelarmige Winkelhebel (25) schwenkbar gelagert sind, deren zum Schweißspalt zeigende Arme als im Querschnitt keilförmig ausgebildete Spannhebel (27) gestaltet sind, deren Hebellängen gleichlang für eine gerade Schweißnaht oder ungleichlang für eine kurvenförmige Schweißnaht gewählt sind und deren zu dem Spannbalken (17) zeigende Arme (26) durch dort angeordnete Druckerzeuger (20;21) betätigbar sind und durch einen im Maschinengestell wechselbar befestigten Schweißtisch (6), dessen Tischfläche (7;11) mindestens auf einer Seite des Schweißspaltes (8) abschnittsweise höhenverstellbar ist.

2. Einrichtung nach Anspruch 1,
dadurch gekennzeichnet,
daß zur Anpassung an den Verlauf der Schweißnaht die Lagerböcke (22) mit den darin gelagert doppelarmigen Winkelhebeln (25) gegen Lagerböcke (22), deren Winkelhebel (25) unterschiedlich lange Spannhebel (27) aufweisen, wechselbar sind.

3. Einrichtung nach Anspruch 1,
dadurch gekennzeichnet,
daß zur Anpassung an den Verlauf der Schweißnaht die in den Lagerböcken (22) gelagerten doppelarmigen Winkelhebel (25) gegen solche Winkelhebel (25) wechselbar sind, deren unterschiedlich langen Spannhebel (27) dem Verlauf der Schweißnaht entsprechen.

4. Einrichtung nach den Ansprüchen 1 bis 3,
dadurch gekennzeichnet,
daß die verschieden ausgebildeten Winkelhebel (25) hinsichtlich der Längen ihrer Spannhebel (27) als Baukasten gestaltet sind.

5. Einrichtung nach den Ansprüchen 1 bis 4,
dadurch gekennzeichnet,
daß die die Winkelhebel (25) betätigenden Druckerzeuger als beidseitig der Arme (26) der Winkelhebel (25) in Spannbelken gelagerte Spannschläuche (20;21) ausgebildet sind.

6. Einrichtung nach Anspruch 1,
dadurch gekennzeichnet,
daß die höhenverstellbare Tischfläche (11) aus streifenförmigen Abschnitten besteht, deren Trennfugen rechtwinklig zum Schweißspalt (8) verlaufen, wobei die streifenförmigen Abschnitte auf im Schweißtisch (6) befestigten Druckzylindern (12) angeordnet sind, die einzeln aussteuerbar sind.

7. Einrichtung nach Anspruch 1,
dadurch gekennzeichnet,
daß die höhenverstellbare Tischfläche (11) aus Abschnitten besteht, deren Trennfugen rechtwinklig zum Schweißspalt (8) verlaufen, die mit unterschiedlichen Dicken und Oberflächenformen ausgeführt und lösbar auf dem Schweißtisch (6) befestigt sind.

8. Einrichtung nach Anspruch 1,
dadurch gekennzeichnet,
daß die höhenverstellbare Tischfläche (11) als längs zum Schweißspalt (8) verformbare Stahlplatte ausgebildet ist, an die die Kolbenstangen einer größeren Anzahl Druckzylinder anliegen, die im Schweißtisch (6) befestigt und einzeln aussteuerbar sind.
